# EUROPEAN PATENT SPECIFICATION

(11) **EP 1 301 725 B1**
(45) Date of publication and mention of the grant of the patent: **06.10.2004**
(21) Application number: 01938829.7
(22) Date of filing: 31.05.2001
(51) Int. Cl.: F16C 43/04, F16C 33/60, F16C 19/18, F16C 19/38, F16C 25/06, B60B 27/00

(54) **METHOD FOR ASSEMBLING A DOUBLE ROW ANGULAR CONTACT ROLLING ELEMENT BEARING UNIT, AND BEARING UNIT MANUFACTURED ACCORDING TO SAID METHOD**
VERFAHREN ZUM ZUSAMMENSETZEN EINER ZWEIREIHIGEN KEGELROLLENLAGERSEINHEIT, UND VERFAHREN FÜR DIESELBE
PROCEDE D'ASSEMBLAGE D'UNE UNITE DE ROULEMENT A ROULEAUX DE CONTACT ANGULAIRE A DOUBLE RANGEE, ET UNITE DE ROULEMENT FABRIQUEE SELON LEDIT PROCEDE

(30) Priority: 14.07.2000 NL 1015724
(43) Date of publication of application: 16.04.2003
(73) Proprietor: SKF Engineering & Research Centre B.V., 3430 DT Nieuwegein (NL)
(72) Inventor: KAPAAN, Hendrikus, Jan, NL-3435 DM Nieuwegein (NL); DITTMAR, Rico, 98574 Schmalhalden (DE)
(74) Representative: van Westenbrugge, Andries
(86) International application number: PCT/NL2001/000425
(87) International publication number: WO 2002/006690

(56) References cited:
- EP-A- 0 664 184
- WO-A-99/31398
- DE-A- 2 906 167
- US-A- 4 647 230
- US-A- 4 900 958

## Description

The invention is related to the field of manufacturing double row angular contact rolling element bearing units wherein a prescribed tolerance or preload is applied between the two bearing parts. The tolerance in question may be positive or zero, but also negative (preload).

A method of this type is disclosed in WO-A-99/31398. According to this prior art method, a flexible endless ring carrying metal segments is positioned in the wedge-shaped gap between the facing surfaces of the outer rings. Subsequently, the metal segments are deformed radially inwardly so as to establish the required tolerance or preload.

Although the bearing unit thus manufactured indeed satisfies the tolerance or preload requirements, the manufacturing process itself can be further improved. In this connection, the invention provides a method for assembling a double row angular contact rolling element bearing unit said bearing unit having an inner element with two raceways, and two separate outer ring elements each with a single raceway, said outer ring elements enclosing a gap which is wedge-shaped in a section through the bearing unit axis, and two series of rolling elements which are each accommodated between a raceway of the inner element and a raceway of an outer ring element, tolerance means being provided between said outer ring elements for urging said elements away from each other so as to provide the required tolerance to the bearing, said method comprising the steps of:
- providing an inner element having two raceways,
- providing two outer ring elements each having a raceway,
- positioning the outer rings elements around the inner element,
- positioning the series of rolling elements between the respective raceways of inner element and outer ring elements, possibly together with cages,
- providing an endless tolerance ring,
- shifting the tolerance ring up to a position opposite to the wedge-shaped gap between the outer ring elements,
- plastically deforming the tolerance ring so as to provide the required tolerance between said tolerance ring and the opposing faces of the outer ring elements which enclose the wedge-shaped gap,
wherein the tolerance ring comprises a number of ring segments, said ring segments enclosing outwardly protruding deformation segments, which deformation segments are plastically deformed.

The required or prescribed tolerance is obtained by judiciously deforming the tolerance ring. After plastic deformation thereof the tool in question is removed and the bearing unit is ready for use.

The amount of tolerance, or the magnitude of the preload can be set by deforming the tolerance ring to a larger or smaller extent. Also, the preload may be increased while rotating the inner element, so as to monitor the increase in rolling resistance and thereby of the preload.

Preferable, the method comprises the steps of:
- providing a tool for plastically deforming the tolerance ring, said tool comprising at least two are shaped claws, the inner surfaces of which defined at least part of the outer shape of the deformed tolerance ring,
- making the tool claws engage the tolerance ring and press said tolerance ring in radially inward direction.

The tolerance ring may comprise a number of ring segments equal to the number of tool claws of the tool, said ring segments enclosing outwardly protruding deformation segments, each deformation segment being plastically deformed by the combined action of a pair of neighbouring tool claws.

The deformation segments may be deformed in the proper way in case each tool claw at its opposite ends has teeth which extend in the circumferential direction, each deformation segment of the tolerance ring being engaged by a pair of teeth of neighbouring tool claws.

A further improvement of the method according to the invention may be obtained in case the tool comprises a respective finger between each pair of tool claws, comprising the steps of:
- making the fingers each engage a deformation segment,
- subsequently applying the tool claws to the ring segments.

In that case, the tool claws can be moved inwardly up to abutment against the fingers. The abutment ensures that the proper amount of deformation of the tolerance ring is obtained.

The invention is also related to a double row angular contact rolling element bearing unit manufactured according to the process described before, comprising an inner element having two raceways, two outer ring elements each carrying at least one raceway and enclosing a wedge-shaped gap, as well as two rows of rolling elements which are in rolling contact each with a pair of raceways. According to the invention the outer ring elements are supported with respect to each other by a tolerance ring providing an axial bearing clearance. The tolerance ring comprises a number of ring segments, said ring segments enclosing outwardly protruding deformation segments, which are plastically deformed.

The tolerance ring may fully lie within the contour defined by the outer surface of the outer elements.

Furthermore, the invention is related to a tool for use in said method, comprising at least two arc-shaped claws, operating means being provided for moving the claws towards each other in a pressing stroke, and from each other in a release stroke.

The claws of said tool at both ends are provided with teeth. At least two fingers are provided, said fingers each being positioned between two tool claws at the end of the pressing stroke and then abutting the fingers. The bearing unit in question can be used in applications wherein either the inner ring or the outer ring is rotating.

The invention is also related to a tolerance ring for use in the method described before for manufacturing a bearing unit. Said tolerance ring comprises a number of ring segments equal to the number of tool claws of the tool, said ring segments enclosing outwardly protruding deformation segments, each deformation segment being intended for plastic deformation by the combined action of a pair of neighbouring tool claws.

The invention will now be described further with reference to the drawings.
Fig. 1 shows a drawing in perspective of a double row taper rolling element bearing unit with undeformed tolerance ring, before assembly.
Fig. 2 shows the completed bearing unit after deformation of the tolerance ring.
Fig. 3 shows a cross section through the tolerance ring in undeformed state, with claws.
Fig. 4 shows an intermediate stage of deforming the tolerance ring.
Fig. 5 shows the fully deformed stage of the tolerance ring.
Fig. 6 - 12 show the process of assembling the double row taper rolling bearing unit.
Fig. 13 shows a truck wheel hub unit which incorporates the bearing according to the invention.
Fig. 14 shows a second embodiment of a truck wheel hub unit
Fig. 15 shows a third embodiment of a truck wheel hub unit.
Fig. 16 shows a pinion gear bearing unit incorporating a bearing unit according to the invention.
Fig. 17 shows a gear bearing transmission unit.
Fig. 18 shows a train wheel bearing unit.
Fig. 19 - 21 show further embodiments of the bearing unit.
Fig. 22 shows an embodiment incorporating a shaft.
Fig. 23 shows a hub unit with a flange.
Fig. 24 shows a trailer wheel bearing unit for a stepped axle shaft.
Fig. 25 shows a further embodiment of a trailer wheel bearing unit.
Fig. 26 shows a third embodiment for a trailer wheel bearing unit.
Fig. 27 shows a rear wheel module.
Fig. 28 shows a truck comer driven execution.
Fig. 29 shows an embodiment with a two-piece inner bearing element.
Fig. 30 shows an embodiment with a separate conical sleeve.

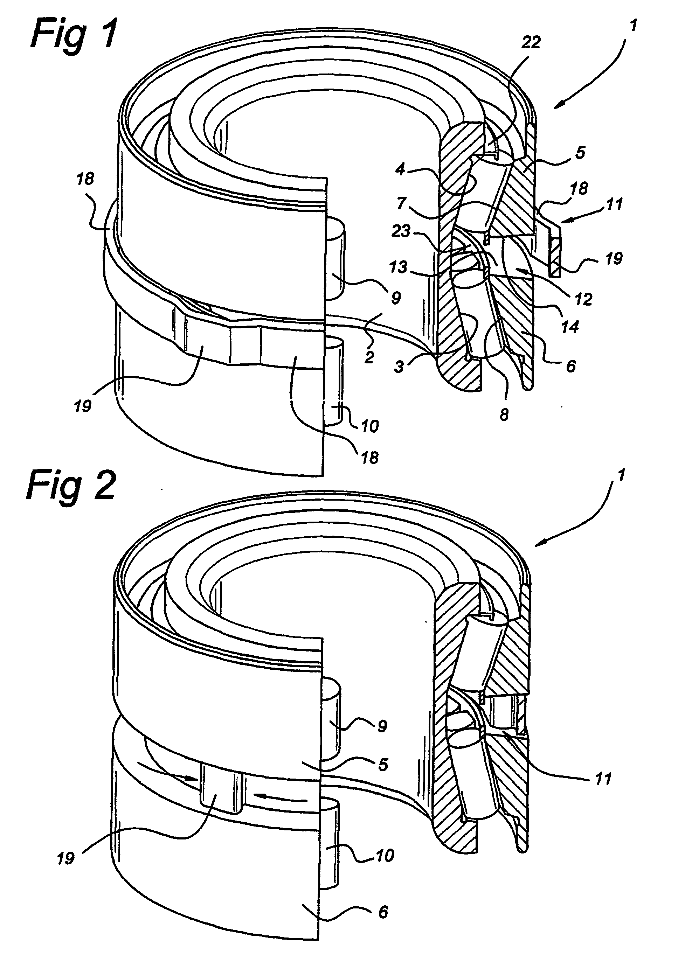

In fig. 1, the start stage is shown of the method for assembling the completed double row taper rolling bearing unit 1 according to fig. 2. Said bearing unit 1 comprises a one piece inner ring 2 which has two conically shaped raceways 3, 4, as well as two separate outer rings 5, 6 each having a single raceway 7,8. The outer rings 5, 6 enclose a gap 12 limited by the wedge shaped opposing faces 13, 14 of the respective outer rings 6, 5. The gap becomes slightly narrower in radial inward direction.

Two series of taper rollers 9, 10 are provided between the raceways 4, 7 and 3, 8, said series containing each a cage 22, 23 as well.

According to the invention, a tolerance ring 11 has been provided, which in the stage of fig. 1 is still undeformed. Said tolerance ring 11 comprises a number of ring segments 18, alternated by an equal number of radially outwardly protruding deformation segments 19.

In the finished state as shown in fig. 2, these deformation segments 19 have been deformed in such a way that the maximum outer diameter of the tolerance ring 11 has been reduced to such an extent, that it falls within the outer circumference of the outer rings 5, 6. Furthermore, the tolerance ring 11 now fully lies between the opposing wedge-shaped faces 13,14 of the respective outer rings 6, 5. Said tolerance ring 11 may have a positive, zero or negative tolerance with respect to these outer rings 5, 6, so as to provide the required or prescribed preload or play in the bearing unit 1.

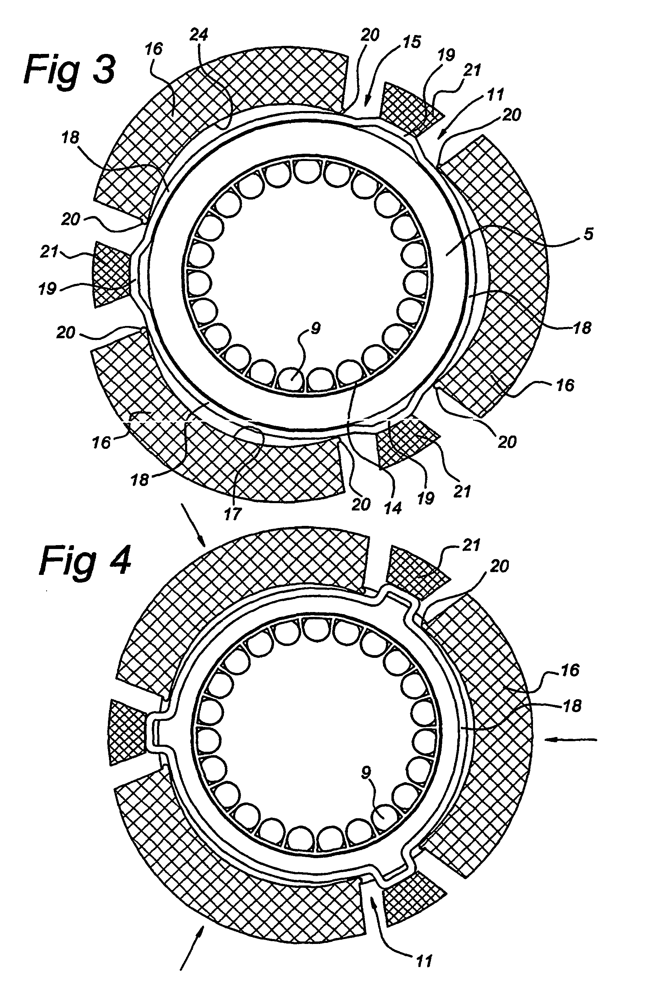

Now turning to fig. 3 - 5, the tool and process for assembling the bearing unit 1 are further elucidated. Fig. 3 corresponds to fig. 1 in the sense that the tolerance ring 11 surrounds the gap 12 between the outer rings 5, 6. The tolerance ring 11 in question has three ring segments 18, and an equal number of outwardly protruding deformation segments 19. A tool 15 is provided, comprising three tool claws 16 as well, each provided with noses 20 at the opposite ends. The inner surface of the tool claws 16 is formed according to the final shape of the ring segments 18, and is curved according to a somewhat smaller radius than the radius of the outer surface of the ring segments 18 of the undeformed tolerance ring 11.

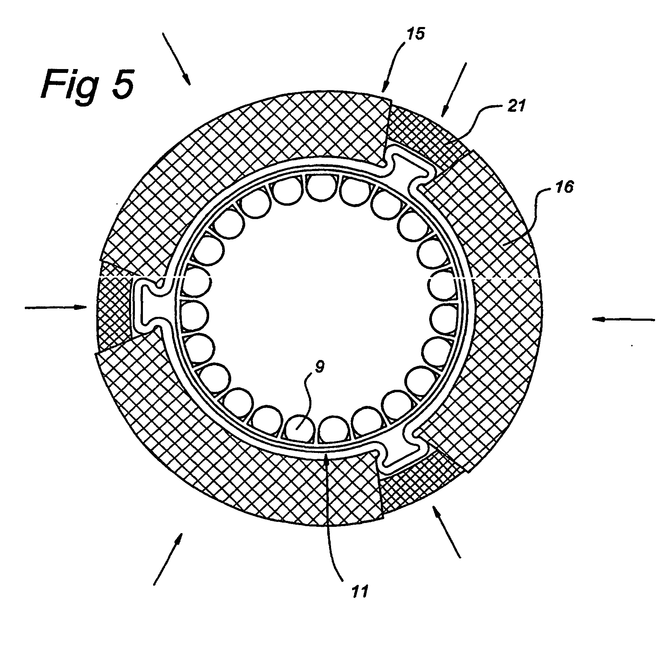

Furthermore, the tool 15 comprises three fingers 21 as well, which are positioned opposite the deformation segments 19. The tool 15 is actuated, and as shown in intermediate stage of fig. 4 the tool claws 16 urge the ring segments 18 into the radial inward direction, while deforming the deformation segments 19 by engagement through the teeth 20.

Further radial inward deformation of the tolerance ring 11 brings the ring segments 18 to their final position as shown in fig. 5. This position is reached as soon as the tool claws 15 with their opposing ends abut the fingers 21. The deformation segments 19 are now fully deformed, and the required preload or play in the bearing unit has been set. In the final stage (not shown), the tool 15 is removed.

The tolerance ring may be manufactured from a metallic or a non-metallic material, or a combination thereof. Also, sensors such as strain gauges may be incorporated so as to measure the preload.

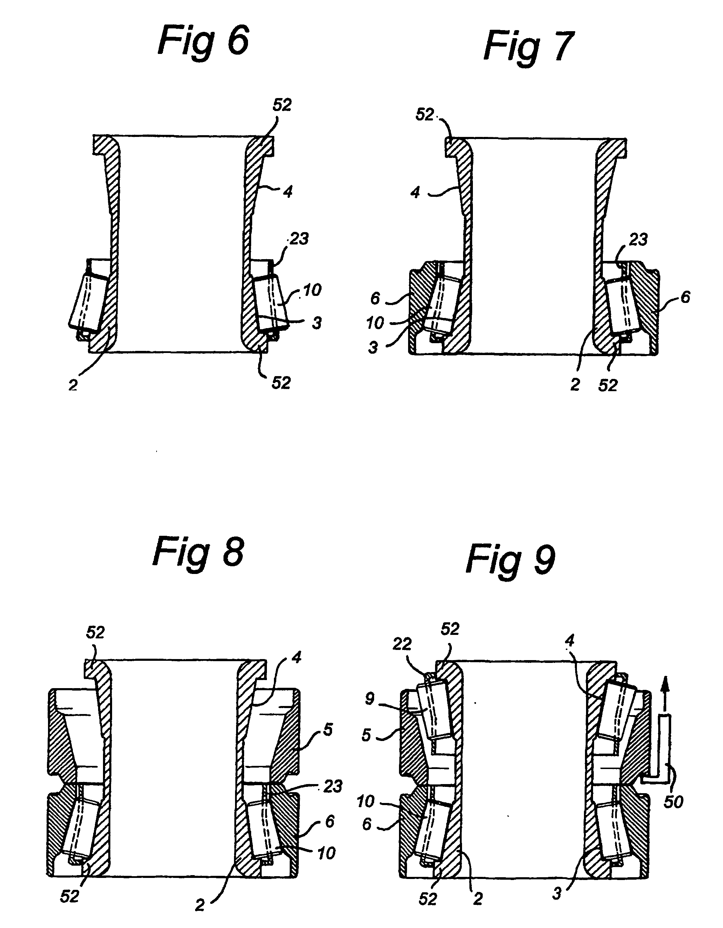

The fig. 6 -12 show the accompanying process of assembling the bearing unit in question. According to fig. 6, the inner ring 2 is in an upright position. In that position the rolling elements 10 and corresponding cage 23 are applied on the raceway 3. Said cage 23 has an inner diameter which is larger than the outer diameter of the end flanges 52. Subsequently, as shown in fig. 7, one of the outer rings 6 is applied around the rolling elements 10.

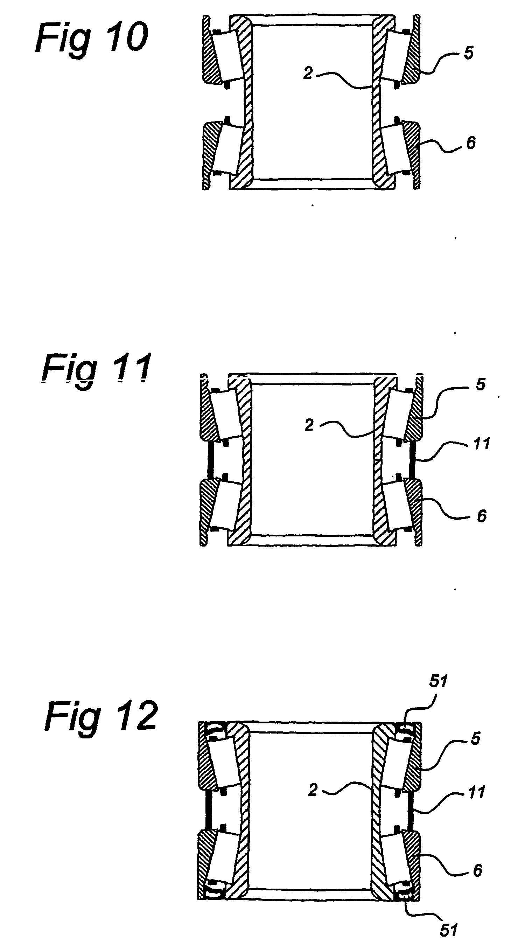

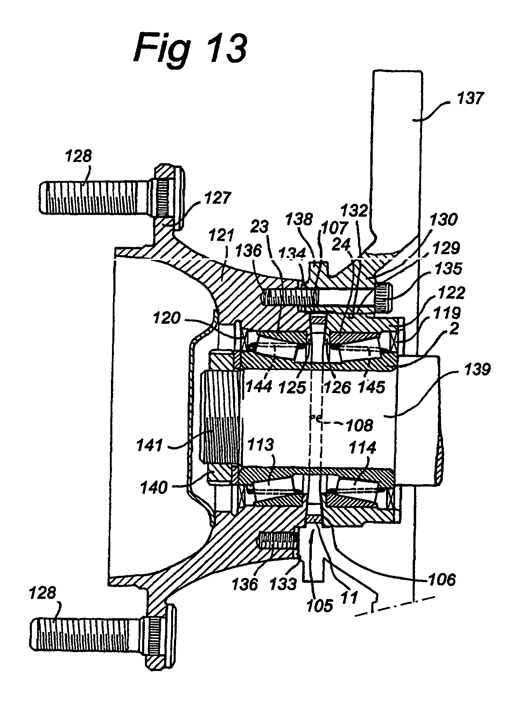

As shown in fig. 8, the second outer ring 5 is positioned onto the first outer ring 6. Subsequently, as shown in fig. 9, the second set of rolling elements 9 with corresponding cage 22 is applied onto the raceway 4. By means of lifting tool 50, shown in fig. 9, the outer ring 5 is lifted so as to obtain the phase of fig. 10. The tolerance ring 11 is placed around the assembly and deformed according to the process of fig. 1 - 5 so as to reach the position of fig. 11. Finally, the bearing unit is equipped with seals 51 as shown in fig. 12. In case the tolerance ring 11 is covered with e.g. a rubber layer, a sealed bearing unit can be obtained.

The embodiment of fig. 13 shows a bearing unit according to the invention incorporated in a truck wheel hub unit. In this truck wheel hub unit, an inner ring 2 has been applied as well. The two outer bearing rings 23, 24 are contained in respective outer ring pieces 121, 122. These outer ring pieces 121, 122 are pressed axially outwardly by means of the tolerance ring 11. The outer bearing rings 23, 24 bear against the axial abutments 125, 126 formed on the outer ring pieces 121 respectively 122, which have been applied by means of a shrink fit.

One of the outer ring pieces 121 carries an external flange 127 having wheel bolts 128 for connecting a wheel thereto. The other outer ring piece 122 has a cylindrical outer surface 129, onto which centring piece 130 has been connected by means of a close tolerance fit. This cylindrical outer surface 129 of the outer ring piece 122 is similar to an outer surface 107 on the other outer ring piece 121.

The centring piece 130 has an inner cylindrical surface 132 which allows a close tolerance fit with the opposing surfaces 107, 129. The outer ring piece 121 has axially extending splines 133, which engage similar axially oriented splines 134 on the centring piece 130.

The centring piece 130 is connected to the outer ring piece 121 by means of bolts 135, screwed in screw threaded holes 136 in said outer ring piece 121. In the alternative, screw threaded holes may be provided in centring piece 130, so as to mount the bolts 135 from the side of outer ring piece 121.

The centring piece 130 furthermore carries a brake disc 137 or brake drum. The braking torque exerted by the brake pads on brake disc 137 are transferred via the splines 133, 134 towards the wheel bolts 128 and finally to the wheel connected thereto, for effecting a braking action.

The centring piece 130 may furthermore carry an outer ridge 138, onto which the jaws of a calliper for removing the bearing from a shaft 139 can be applied.

The hub unit, in particular in the inner ring 2 thereof, is secured onto the shaft 139 by means of a nut 140, which engages the screw threaded end 141 of the shaft 139. The bearing space is sealed by means of seals 119,120.

Although in fig. 13 the raceways are formed on outer bearing rings 23, 24, the raceways may alternatively also be formed directly in the outer ring piece 121, 122. Said outer ring pieces 121, 122 may consist of cast iron. By means of a laser cladding process, the desired quality for the raceways could then be obtained.

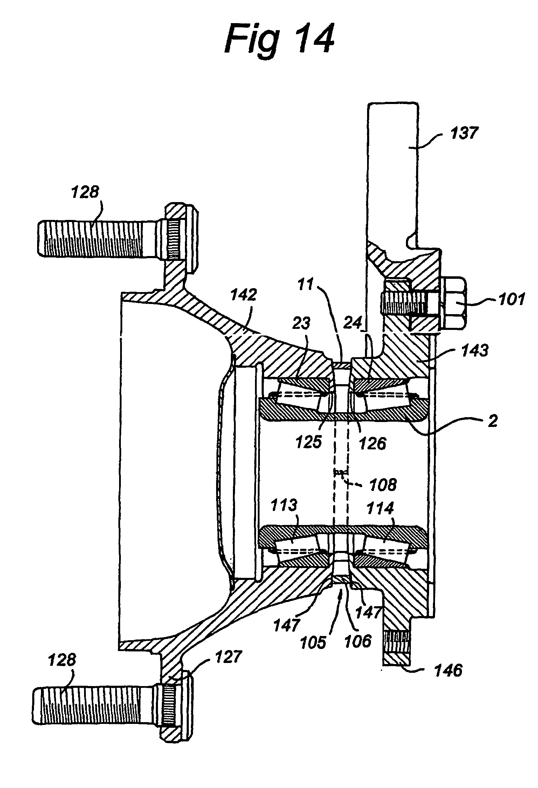

The embodiment of fig. 14 comprises to a large extent the same components as the embodiment of fig. 13. However, this embodiment is related to a truck hub unit, the outer ring piece 142 of which carries an outer flange 127 with wheel bolts 128, and the other outer ring piece 143 of which carries an outer flange 146, e.g. for connecting a brake drum or brake disc 137 thereto by means of bolts 101.

The connection between such brake drum or brake disc and the wheel connected to the wheel bolts 128 is now by way of the outer ring pieces 143 and the tolerance ring 11.

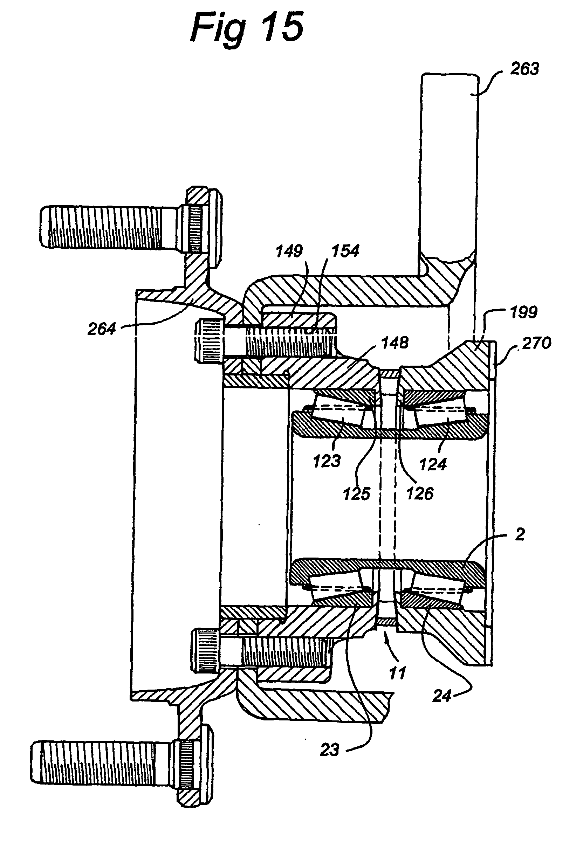

The embodiment shown in fig. 15 again to a considerable extent corresponds to the embodiments of fig. 13 and 14. The outer ring piece 148 carries an external flange 149, having holes 154 connecting an element thereto, e.g. a brake disc 263 or brake drum, and a flange 264 for connecting a wheel. Also a counter ring 270 for a sensor, e.g. an ABS-sensor, may be provided.

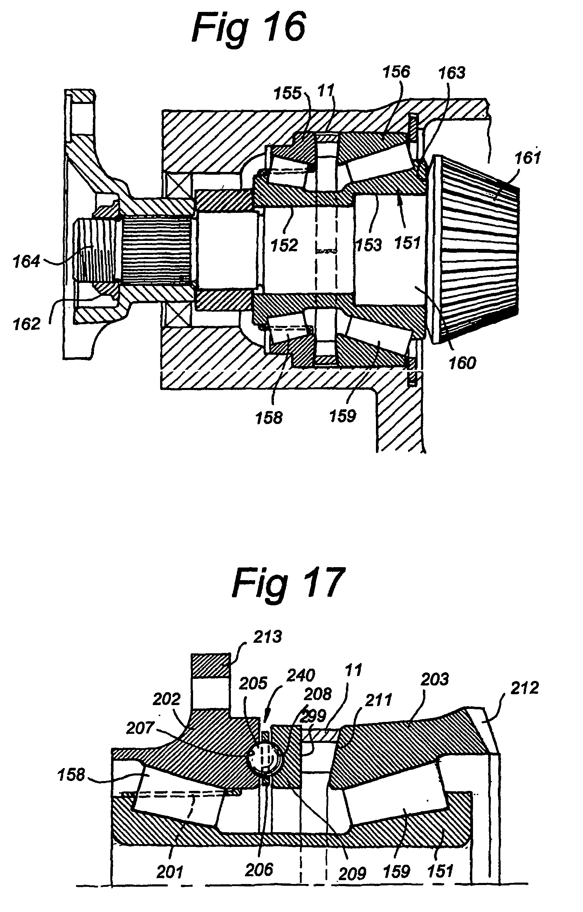

The embodiment shown in fig. 16 consists of a bearing unit having an inner bearing ring 151 with stepped portions 152, 153. The two outer bearing rings 155, 156, are preloaded by tolerance ring 11.

The inner bearing ring 151 and the outer bearing rings 155, 156 are mutually supported by two rows of rollers 158, 159. The rollers 159 are of a bigger size than the rollers 158, which makes this bearing particularly suitable for taking up the drive torque of a pinion bearing unit. Rollers 158 are contained in a cage 201.

The inner bearing ring 151 is clamped between the abutment 163 of the shaft 160, and the nut 162 which co-operates with the screw threaded portion 164 of the shaft 160.

Fig. 17 shows a further embodiment which is suitable for a bearing transmission unit. By means of full complement rollers 159 and rollers 158 which are separated by cage 201, the inner bearing ring 151 co-operates with two outer bearing rings 202, 203 which are also rotatable with respect to each other. To that end, a bearing 204, having balls 205 separated by a cage 206, co-operates with raceways 207, 208 of respectively the outer ring 202 and a thrust bearing ring 209.

The thrust bearing ring 209 in turn engages tolerance ring 11 through its flat surface 299. Furthermore, the tolerance ring engages the wedge-shaped surface 211 of the outer ring 203. The outer ring 203 includes an integrated gear 212. Outer ring 202 furthermore comprises a mounting flange 213. The inner bore of the inner ring 151 may comprise splines or a thread for connecting purposes. Instead of balls 205, rollers or needles may be used.

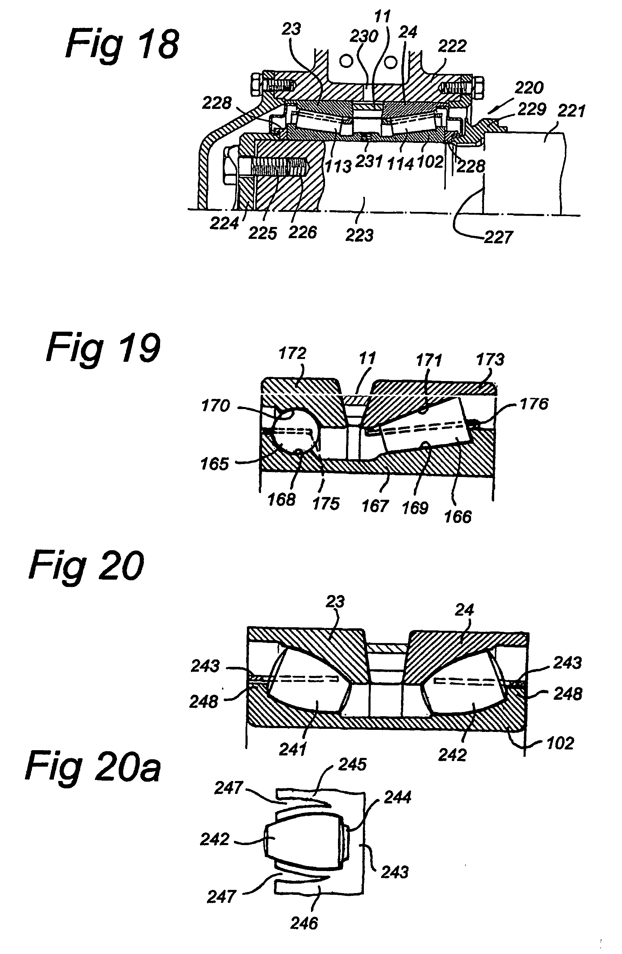

The embodiment of fig. 18 shows a railway wheel bearing unit 220 by means of which the axle 221 is rotatably supported in support 222 of a railway bogey. The inner ring 102 is mounted on stub 223 of the axle 221. By means of cap 224 and bolts 225, and screw threaded holes 226 in axle stub 223, the inner ring 102 is pressed onto the shoulder 227 of the axle 221, through rings 228, 229. The rollers 113, 114 each engage an outer bearing ring 23, 24, which bearing rings are supported with respect to each other by means of tolerance ring 11.

A bore 230 respectively 231 extends through the tolerance ring 11 and the inner ring 102. Through bore 230, an oil feed pipe may be connected to bore 231, for supplying oil under pressure in between the axle stub 223 and the inner bearing ring 102. Thereby, the inner bearing ring 102 can be dismounted easily.

The embodiment of fig. 19 shows a double row angular contact bearing having a series of balls 165 and a series of tapered rollers 166. The inner bearing ring 167 of the bearing has corresponding raceways 168, 169. The opposite raceways 170, 171 have been formed in the outer bearing rings 172, 173, which are mutually preloaded by tolerance ring 11. By means of cages 175, 176, the elements 165, 166 are held at the proper mutual distance.

Fig. 20 shows an embodiment having an inner bearing ring 102 and two outer bearing rings 23, 24, which engage each other by means of spherical rollers 241, 242. The rows of rollers 241, 242 are separated by means of cages 243. Fig. 20A shows one pocket 244 of a plastic snap cage 243. This pocket 244 is enclosed between two prongs 245, 246, each provided with a cavity 247 for providing some resilience.

As a result of this resilience, the prongs 245, 246 can be slid sideways onto the rolling elements 241. Moreover, the inner diameter of the cages 243 is greater than the outer diameter of the supports 248 which border the raceways of the rolling elements 241, 242, such that a correct mounting of the cages 243 is ensured.

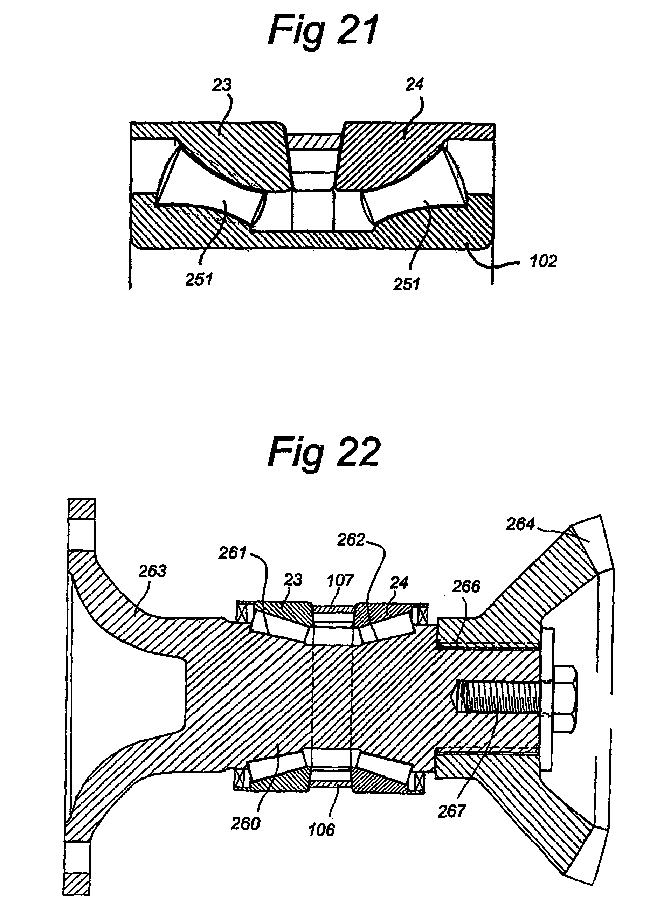

The embodiment of fig. 21 shows an inner bearing ring 102 and outer bearing rings 23, 24 having rolling elements 251 which are shaped according to a hollow curve.

Fig. 22 shows a bearing unit wherein the inner bearing piece is constituted by a solid shaft 260 e.g. for a pinion bearing unit. Said shaft has two raceways 261, 262 directly manufactured in its outer surface. The outer ring of the bearing unit is constituted by outer bearing rings 23, 24, mutually preloaded by tolerance ring halves 106, 107. The shaft 260 may consist of two parts welded together.

Onto the shaft 260, a flange 263 and bevel gear 264 have been mounted respectively by means of a key/spline connection 266 together with a bolt 267. The shaft may also be carried out with two flanges at its opposite ends, either integrally or with a separate mounting piece.

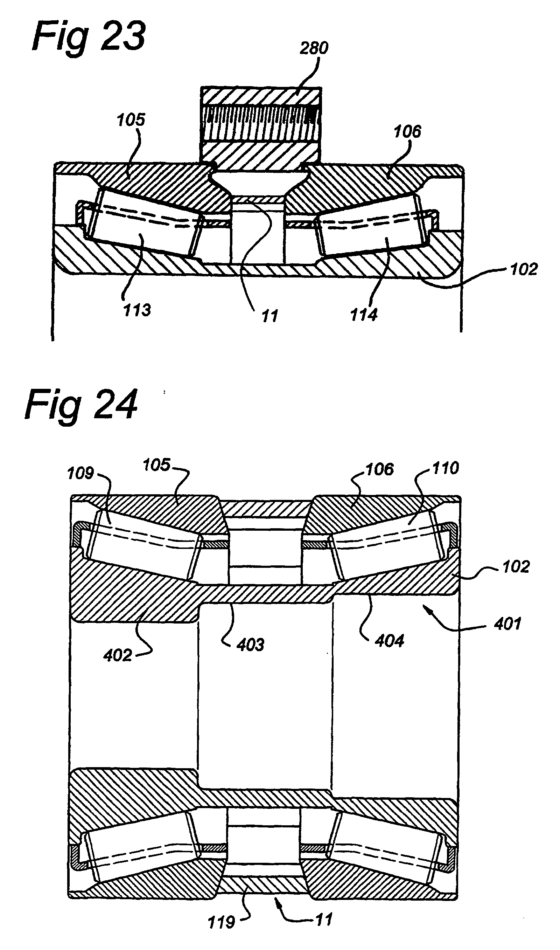

As shown in fig. 23, also a flange 280 may be connected onto the outside of the bearing unit, between the outer bearing rings 105, 106, and surrounding tolerance ring 11.

Fig. 24 shows a wheel bearing unit having it one piece bearing ring 401 with inner bore parts 402, 403, 404 of different diameters. Such a wheel bearing unit is fit for mounted on a correspondingly shaped, stepped axle shaft. The outer ring pieces 105, 106 are preloaded by tolerance ring 11.

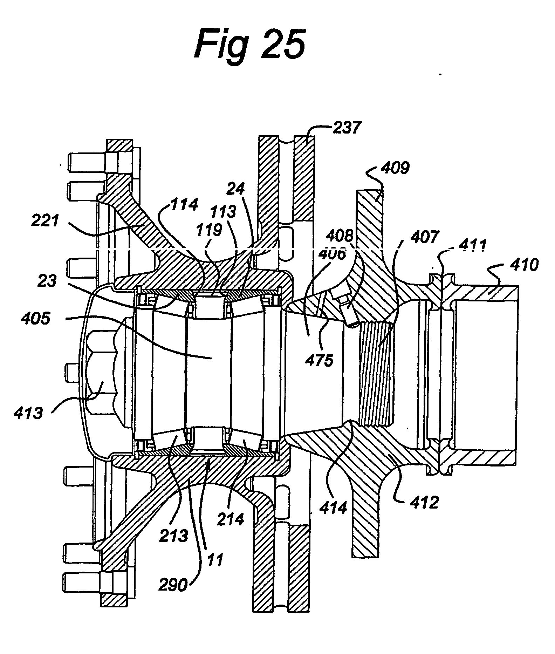

Fig. 25 shows a cross section through a trailer wheel bearing unit. This trailer wheel bearing unit resembles to some extent the truck wheel hub unit according to fig. 13. However, in the trailer wheel bearing unit according to fig. 25 a solid axle stub 405 has been applied, which is connected to the trailer suspension 410 by means of mounting piece 412 welded by means of friction well 411 through the trailer suspension.

The solid axle stub 405 and the mounting piece 412 engage each other through their respective conical parts 406 and screw threaded parts 407. By means of the hexagon 413 of the solid axle stub 405, the fixation is made. The fixation is secured by means of the securing screw 408, which engages the circumferential groove 414 between the conical part 406 and the screw threaded part 407 of the axle stub 405.

The mounting piece 412 carries a fixation flange 409 for mounting a brake actuator, for instance a hydraulic brake actuator or a electrical/mechanical brake actuator, which engages the brake disc 237. Said brake disc forms part of the hub member 290, which is mounted onto the outer rings 23, 24.

Through bore 475, oil may be injected for mounting purposes.

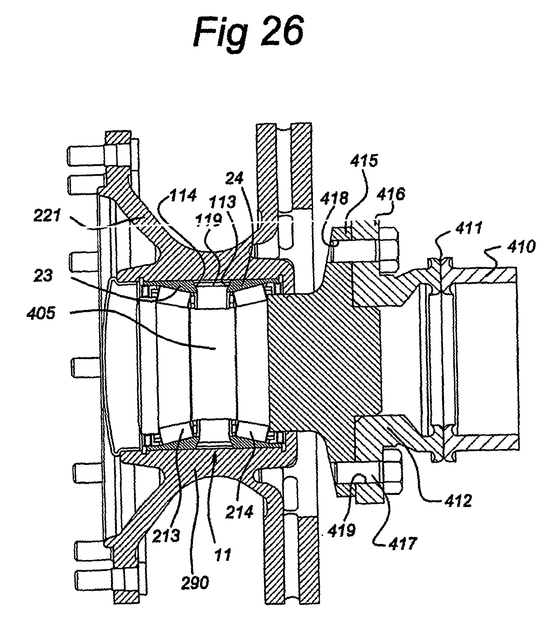

The trailer wheel bearing unit shown in fig. 26 resembles to some extent the trailer wheel bearing unit according to fig. 25. However, the solid axle stub 405 has now been provided with a flange 415, which is connected to a corresponding flange 416 of the mounting piece 412. The flange 416 of the mounting piece 412 comprises holes 419 through which the bolts 417 have been screwed into the screw threaded bores 418 of the flange 415 of the solid axle stub 405.

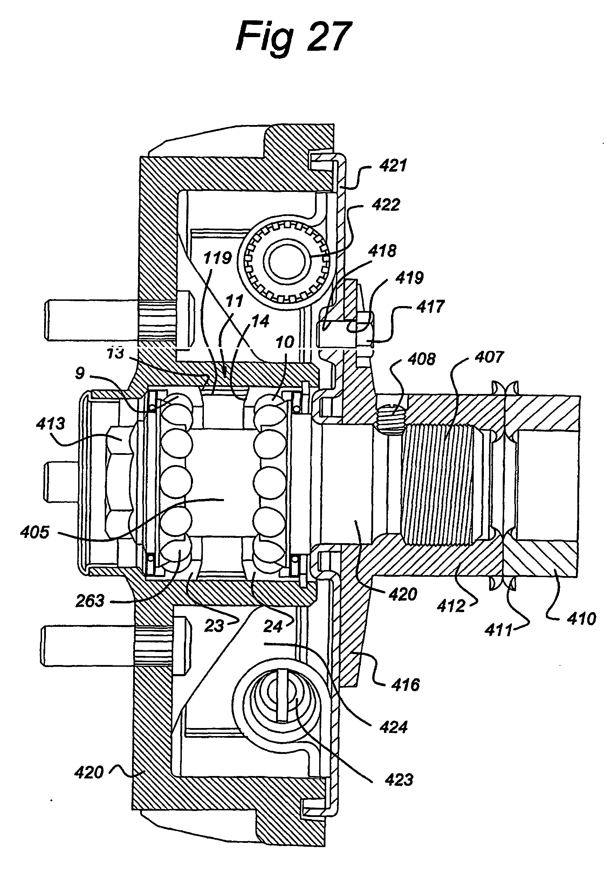

The embodiment of fig. 27 shows a rear wheel module for a passenger car, wherein the solid axle stub 405 engages the connection piece 412 through cylindrical parts 420 and screw threaded parts 407. By means of welds 411, the connection piece 412 has been welded to the rear axle 410.

Here as well, the connection piece comprises a flange 416, having holes 419 through which the bolts 417 are screw threaded in holes 418 of the drum brake back plate 421. In the usual way, a hydraulic or electrical/mechanical actuator 422 is connected to the drum brake back plate 421, as well as a spring 423 for urging the drum shoes 424 towards each other.

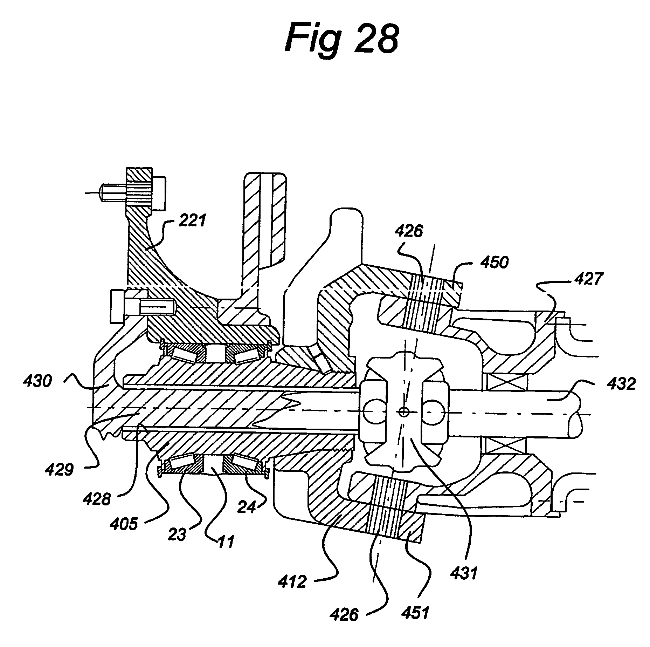

Fig. 28 discloses a truck comer driven execution which to a large extent resembles the bearing unit according to fig. 25. The mounting piece 412 has ears 450, 451 onto which the kingpins 426 are mounted. The kingpins are carried by the front axle 427.

In the embodiment shown, the axle stub 405 is hollow. Through the hollow bore 428 of the axle stub, the drive end 429 extends, which by means of flange 430 is connected to the cast iron hub 221. By means of the drive joint 431, the drive end 429 is connected to the drive shaft 432.

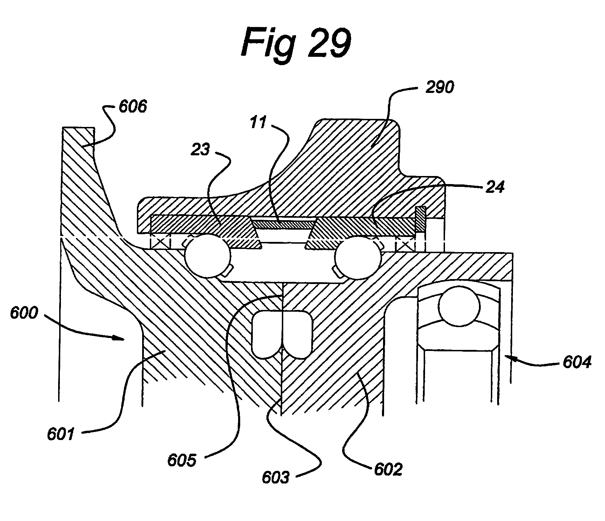

The embodiment of figure 29 shows an embodiment having an inner ring piece 600 which is obtained by connecting the inner ring piece halves 601, 602 together through a friction weld 603. The abutment faces 605 define the end position of these inner ring piece halves 601, 602.

The outer rings 23, 24 are reloaded through tolerance ring 11. Onto the outer rings 23, 24 a head member 290 is mounted. One of the inner bearing piece halves 602 is provided with a constant velocity joint 604, the other inner bearing piece halve 601 with a mounting flange 606.

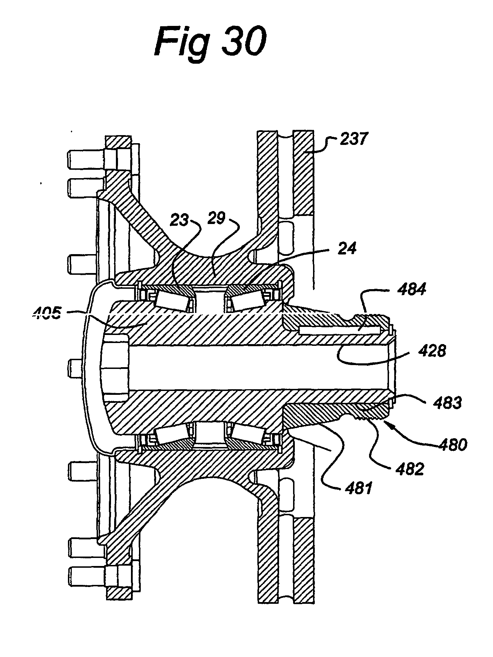

The embodiment of figure 30 shows a hollow stub axle 405, having a bore 428. The stub axle has a cylindrical end 483, onto which a mounting sleeve 480 is mounted. This mounting sleeve comprises a conical part and a screw threaded part 482, and is held non-rotabably with respect to the axle stub 405 through the key/groove connection 484.

The stub axle 405 can be mounted onto a correspondingly shaped axle member (not shown) through the mounting sleeve 480.

## Claims

1. Method for assembling a double row angular contact rolling element bearing unit (1) having an inner element (2) with two raceways (3, 4), and two separate outer ring elements (5, 6) each with a single raceway (7, 8), said outer ring elements (5, 6) enclosing a gap (12) which is wedge-shaped in a section through the bearing unit axis, and two series of rolling elements (9, 10) which are each accommodated between a raceway (3, 4) of the inner ring element (2) and a raceway (7, 8) of an outer ring element (5,6), tolerance means (11) being provided between said outer ring elements (5, 6) for urging said elements (5, 6) away from each other so as to provide the required tolerance to the bearing, said method comprising the steps of:
- providing an inner element (2) having two raceways (3, 4),
- providing two outer ring elements (5, 6) each having a raceway (7, 8),
- positioning the outer ring elements (5, 6) around the inner element (2),
- positioning the series of rolling elements (9, 10) between the respective raceways (3, 4; 7, 8) of inner element (2) and outer ring elements (5, 6),
- providing an endless tolerance ring (11),
- shifting the tolerance ring (11) up to a position opposite to the wedge-shaped gap (12) between the outer ring elements (5, 6),
- plastically deforming the tolerance ring (11) so as to provide the required tolerance between said tolerance ring (11) and the opposing faces (13, 14) of the outer ring elements (5, 6) which enclose the wedge-shaped gap (12),
wherein the tolerance ring (11) comprises a number of ring segments (18), said ring segments (18) enclosing outwardly protruding deformation segments (19), which deformation segment (19) are plastically deformed.

2. Method according to claim I comprising the steps of:
- providing a tool (15) for plastically deforming the tolerance ring (11), said tool (15) comprising at least two arc-shaped claws (16), the inner surfaces (17) of which defining at least part of the outer shape of the deformed tolerance ring (11),
- making the tool claws engage the tolerance ring (11) and press said tolerance ring (11) in radially inward direction.

3. Method according to claim 2, wherein the number of ring segments (18) is equal to the number of tool claws (16) of the tool (15), the plastic deformation being obtained by the combined action of a pair of neighbouring claws (16).

4. Method according to claim 3, wherein each tool claw (16) at its opposite ends has teeth (20) which extend in the circumferential direction, each deformation segment (19) of the tolerance ring (11) being engaged by a pair of teeth (20) of neighbouring tool claws (16).

5. Method according to claim 2, 3 or 4, , wherein the tool comprises a respective finger (21) between each pair of tool claws (16), comprising the steps of:
- making the fingers (21) each engage a deformation segment (19),
- subsequently applying the tool claws (16) to the ring segments (18).

6. Method according to claim 2, 3, 4 or 5, wherein the tool comprises a respective finger (21) between each pair of tool claws (16), comprising the step of moving the claws (16) inwardly up to abutment against the fingers (21).

7. Method according to any of the preceding claims, wherein the tolerance ring (11) comprises at least one or a higher uneven number of ring segments (18) and an equal number deformation segments (19).

8. Method according to one of the preceding claims, comprising the step of providing an endless tolerance ring (11), the cross-sectional dimensions of which are larger than the outer diameter of at least one of the outer ring elements (5, 6).

9. Method according to one of the preceding claims, comprising the step of plastically deforming the tolerance ring (11) so as to reduce the cross-sectional dimensions thereof.

10. Double row angular contact rolling element bearing unit manufactured according to the method of any of claims 1 - 9, comprising an inner element (2, 102, 151, 167, 260, 405, 600) having two raceways (3, 4; 168, 169), two outer ring elements (5, 6; 23, 24; 155, 156; 172, 173; 105, 106; 202, 203) each carrying at least one raceway (7, 8; 170, 171) and enclosing a wedge-shaped gap (12), as well as two rows ofrolling elements (9, 10; 109, 110; 113, 114; 123, 124; 158, 159; 165, 166; 241, 242; 251, 252) which are in rolling contact each with a pair of raceways, said outer ring elements being supported with respect to each other by a tolerance ring (11) providing an axial bearing clearance, **characterized in that** the tolerance ring (11) comprises a number of ring segments (18), said ring segments (18) enclosing outwardly protruding deformation segments (19), which deformation segments (19) being plastically deformed.

11. Bearing unit according to claim 10, wherein the tolerance ring (11) fully lies within the contour defined by the outer surfaces of the outer ring elements (5, 6).

12. Bearing unit according to the preceding claims, wherein at least one of the series of rolling elements (9, 10) is a full complement series.

13. Bearing unit according to any of the claims 10 - 12, wherein the tolerance ring (11) comprises seal means (51), e.g. a rubber covering.

14. Bearing unit according to any of the claims 10 - 13, wherein the tolerance ring comprises a sensor, e.g. a strain gauge for measuring a preload.

15. Bearing unit according to any of claims 10 - 14, wherein the outer ring elements (121, 122; 142, 143) each comprise an outer bearing ring (23, 24; 155, 156) provided with a raceway as well as two outer ring pieces (121, 122; 142, 143; 148, 149) provided with abutments (125, 126) against which a respective outer bearing ring (23, 24) rests, said abutments (125, 126) facing away from each other and the tolerance ring (11) engaging the outer ring pieces (121, 122; 142, 143; 148; 149).

16. Bearing unit according to any of claims 10-14, wherein the outer ring elements (5, 6) each comprise an outer bearing ring (23, 24; 105, 106; 155, 156; 202, 203; 172, 173) provided with a raceway (7, 8), and the tolerance ring (11) engaging said outer bearing rings (23, 24).

17. Bearing unit according to any of claims 10 - 16, wherein the tolerance ring (11) is connected to the outer ring elements (5, 6; 23, 24...) by means of glueing.

18. Bearing unit according to any of claims 15 - 17, wherein at least one of the outer ring pieces (121,122, 142, 143, 148) has an outwardly extending mounting flange (127, 137, 146, 149).

19. Bearing unit according to claims 15-18, wherein at least one of the outer ring pieces (122, 143) carries a brake disc (137) or brake drum (420).

20. Bearing unit according to claim 19, wherein the brake disc (137) or brake drum (420) is connected to a centring piece (130) which is mounted on one of the ring pieces (122) by means of a close tolerance fit.

21. Bearing unit according to claim 20, wherein the other ring piece (121) carries means (127, 128) for mounting a wheel thereto, which other ring piece (121) and the centring piece (130) engage each other by means of splines (133, 134).

22. Bearing unit according to any of claims 10 - 21, wherein the inner element (151, 401) has stepped bore diameters (152, 153; 402, 403, 404).

23. Bearing unit according to any of claims 10 - 22, wherein the inner element comprises at least one hole for passing through a gas, or a liquid, or electrical/electronic wires.

24. Bearing unit according to any of claim 10 - 23, wherein the inner element comprises at least one hole for passing through a tyre pressure control means.

25. Bearing unit according to any of claims 10 - 24, wherein the inner element has radially outwardly extending flanges for support of the rolling elements in an "O"-type contact bearing configuration.

26. Bearing unit according to any of claims 10 - 25, wherein at least one row of rolling elements comprises balls (165, 205).

27. Bearing unit according to any of claims 8 - 26, wherein at least one row of rolling elements comprises cylindrical rollers (13, 14, 66).

28. Bearing unit according to any of claims 10 - 27, wherein at least one row of rolling elements comprises spherically shaped rollers.

29. Bearing unit according to any of claims 10 - 28, wherein at least one row of rolling elements comprises tapered rollers.

30. Bearing unit according to any of claims 10 - 29, wherein the rolling elements of at least one row are separated by means of a metallic or non metallic cage (23; 175, 176; 243), e.g. a plastic cage which is split, or which has slitted pockets for the rolling elements.

31. Bearing unit according to any of claims 10 - 30, wherein the rolling elements of at least one row are arranged according to a full complement layout.

32. Bearing unit according to any of claims 10 - 31, wherein the inner element is a ring piece (15, 51) or a hollow piece.

33. Bearing unit according to any of claims 10 - 31, wherein the inner element is a solid element (160).

34. Bearing unit according to claim 33, wherein the solid element (160) comprises two parts which are connected e.g. welded together.

35. Bearing unit according to any of claims 10 - 34, comprising integrated sensors or associated components (e.g. counter ring) for performing controlling/monitoring functions, e.g. rotational speed or speed difference, pressure, temperature, position etc.

36. Bearing unit according to any of claims 10 - 35, wherein the inner bearing element has an aperture for feeding gas or oil (e.g. oil injection for dismounting) to its inner surface, or for passing electric wires.

37. Bearing unit according to any of claims 10-36, wherein different components, such as rings and ring pieces, cages, comprise different metals/non-metals.

38. Bearing unit according to any of claims 10 - 37, wherein the tolerance ring (11) is welded.

39. Bearing unit according to any of claims 10 - 38, wherein the bearing clearance can be positive (play), zero or negative (preload).

40. Vehicle wheel hub unit, comprising a bearing unit according to any of claims 10-39.

41. Pinion bearing unit, comprising a bearing unit according to any of claims 10 - 39.

42. Railway bearing unit, comprising a bearing unit according to any of claims 10 - 39.

43. Transmission bearing unit, comprising a bearing unit according to any of claims 10-39.

44. Actuator bearing unit, comprising a bearing unit according to any of claims 10 - 39.

45. Drill bit bearing unit, comprising a bearing unit according to any of claims 10 - 37.

46. Tool for use in the method according to any of claims 2 - 4, comprising at least two arc-shaped claws (16), operating means being provided for moving the claws (16) towards each other in a pressing stroke, and from each other in a release stroke, **characterized in that** each claw (16) at both ends in circumferential direction is provided with teeth (20).

47. Tool according to claim 46 wherein at least two fingers (21) are provided, said fingers (21) each being positioned between two tool claws (16) at the end of the pressing stroke abutting the fingers (21).

48. Tolerance ring (11) for use in a double row angular contact rolling element bearing unit according to any of claims 10 - 40, **characterized in that** the tolerance ring comprises a number of ring segments (18) enclosing outwardly protruding deformation segments (19), each deformation segment (19) being intended for plastic deformation.

## Patentansprüche

1. Verfahren zur Montage einer doppelreihigen schrägen Rollkörperlagereinheit (1) mit einem inneren Element (2) mit zwei Laufflächen (3, 4) und zwei getrennten äußeren Ringelementen (5, 6), welche jeweils eine einzelne Lauffläche (7, 8) aufweisen und die äußeren Ringelemente (5, 6) einen Spalt (12) einschließen, der sich innerhalb einer Sektion keilförmig durch die Achse der Lagereinheit erstreckt und zwei Gruppen von Rollkörpern (9, 10), welche jeweils zwischen einer Lauffläche (3, 4) des inneren Ringelements (2) und einer Lauffläche (7, 8) eines äußeren Ringelements (5, 6) untergebracht sind, ferner mit einer Ausgleichseinrichtung (11), welche zwischen den äußeren Ringelementen (5, 6) untergebracht ist und diese Elemente (5, 6) auseinander drängen, um die geforderte Toleranz im Lager herbeizuführen mit nachfolgenden Verfahrensschritten:
- dem Vorsehen eines inneren Ringelements (2) mit zwei Laufflächen (3, 4),
- dem Vorsehen von zwei äußeren Ringelementen (5, 6), welche jeweils eine Lauffläche (7, 8) umfasst,
- dem Anordnen der äußeren Ringelemente (5, 6). um das innere Ringelement (2),
- dem Anordnen der Gruppen von Rollkörpern (9, 10) zwischen den entsprechenden Laufflächen (3, 4; 7, 8) des inneren Elements (2) und der äußeren Ringelemente (5, 6),
- dem Vorsehen eines endlosen Toleranzrings (11),
- dem Verschieben des Toleranzrings (11) bis zu einer Position gegenüber dem keilförmig ausgebildeten Spalt (12) zwischen den äußeren Ringelementen (5, 6),
- dem plastischen Deformieren des Toleranzrings (11) zur Herbeiführung der erforderlichen Toleranz zwischen dem Toleranzring (11) und den einander gegenüber liegenden Flächen (13, 14) der äußeren Ringelemente (5, 6), welche den keilförmigen Spalt (12) begrenzen,
**dadurch gekennzeichnet, dass** der Toleranzring (11) eine Anzahl von Ringsegmenten (18) aufweist und die Ringsegmente (18) nach außen hervortretende Deformationssegmente (19) umfassen, wobei die Deformationssegmente plastisch deformiert werden.

2. Verfahren gemäß Anspruch 1 mit nachfolgenden Verfahrensschritten:
- dem Bereitstellen eines Werkzeugs (15) zum plastischen Deformieren des Toleranzrings (11), wobei das Werkzeug zumindest zwei bogenförmig geformte Klauen (16) aufweist, deren innere Flächen (17) zumindest einen Teil der äußeren Form des deformierten Toleranzrings (11) definieren,
- dem Herbeiführen des Ergreifens des Toleranzrings (11) durch die Werkzeugklauen und dem Pressen des Toleranzrings (11) radial nach Innen.

3. Verfahren gemäß Anspruch 2, **dadurch gekennzeichnet, dass** die Anzahl der Ringsegmente (18) gleich der Anzahl der Klauen (16) des Werkzeugs (15) ist, wobei die plastische Deformation durch das Zusammenwirken eines Paares benachbarter Klauen (16) erreicht wird.

4. Verfahren gemäß Anspruch 3, **dadurch gekennzeichnet, dass** jede Werkzeugklaue (16) an ihren gegenüberliegenden Enden einen Zahn (20) aufweist, der sich in Umfangsrichtung erstreckt und jedes Deformationssegment (19) des Toleranzrings (11) durch ein Paar von Zähnen (20) benachbarter Werkzeugklauen (16) ergriffen wird.

5. Verfahren gemäß der Ansprüche 2, 3 oder 4, **dadurch gekennzeichnet, dass** das Werkzeug entsprechende Finger (21) zwischen jedem Paar von Klauen (16) aufweist und mit nachfolgenden Verfahrensschritten:
- dem Herbeiführen des Einwirkens der Finger (21) auf ein Deformationssegment (19),
- dem nachfolgenden Anwenden der Werkzeugklauen (16) auf die Ringsegmente (18).

6. Verfahren gemäß der Ansprüche 2, 3, 4 oder 5, **dadurch gekennzeichnet, dass** das Werkzeug entsprechende Finger (21) zwischen jedem Paar von Werkzeugklauen (16) aufweist und die Klauen (16) nach innen bis zum Anschlag an die Finger (21) bewegt werden.

7. Verfahren gemäß einem der vorhergehenden Ansprüche, **dadurch gekennzeichnet, dass** der Toleranzring (11) zumindest eine oder eine höhere ungerade Zahl von Ringsegmenten (18) und eine gerade Zahl von Deformationssegmenten (19) aufweist.

8. Verfahren gemäß einem der vorhergehenden Ansprüche, **dadurch gekennzeichnet, dass** ein endloser Toleranzring (11) eingesetzt wird, dessen Querschnittsdimensionen größer sind als der äußere Durchmesser zumindest eines der äußeren Ringelemente (5, 6).

9. Verfahren gemäß einem oder mehrerer der vorhergehenden Ansprüche, **dadurch gekennzeichnet, dass** der Toleranzring (11) plastisch deformiert wird, derart, dass dessen Querschnitts-Dimension reduziert wird.

10. Doppelreihige schräge Rollkörperlagereinheit, hergestellt gemäss einem oder mehrer der Ansprüche 1 bis 9 mit einem inneren Element (2, 102,151,167, 260,405, 600) mit zwei Laufflächen (3, 4; 168, 169), zwei äußeren Ringelementen (5, 6; 23, 24; 155, 156; 172, 173; 105, 106; 202, 203), welche jeweils zumindest eine Lauffläche (7, 8; 170, 171) haben und einen keilförmigen Spalt (12) begrenzen, sowie zwei Reihen von Rollkörpern (9, 10; 109, 110; 113, 114; 123, 124; 158, 159; 165, 166; 241, 242; 251, 252), welche jeweils in Rollkontakt mit einem Paar von Laufflächen stehen, wobei die äußeren Ringelemente in Bezug zueinander durch einen Toleranzring (11) abgestützt sind, der ein axiales Lagerspiel herbeiführt, **dadurch gekennzeichnet, dass** der Toleranzring (11) eine Anzahl von Ringsegmenten (18) aufweist und die Ringsegmente (18) nach Außen vorstehende Deformationssegmente (19) umschließen, wobei die Deformationssegmente (19) plastisch deformierbar sind.

11. Lagereinheit gemäß Anspruch 10, **dadurch gekennzeichnet, dass** der Toleranzring (11) vollständig innerhalb einer Kontur liegt, die durch die äußeren Oberflächen der äusseren Ringelemente (5, 6) definiert ist.

12. Lagereinheit gemäß einem der vorhergehenden Ansprüche, **dadurch gekennzeichnet, dass** zumindest eine Gruppe von Rollkörpem (9, 10) eine vollständige Gruppe ist.

13. Lagereinheit gemäß einem der Ansprüche 10 bis 11, **dadurch gekennzeichnet, dass** der Toleranzring (11) Abschirmeinrichtungen (51) aufweist, die z.B. als Gummiabdeckung ausgebildet sind.

14. Lagereinheit gemäß einem der Ansprüche 10 bis 13, **dadurch gekennzeichnet, dass** der Toleranzring einen Sensor umfasst, so zum Beispiel ein Dehnungsmessgerät zur Messung der Vorlast.

15. Lagereinheit gemäß einem der Ansprüche 10 bis 14, **dadurch gekennzeichnet, dass** die äußeren Ringelemente (121, 122; 142, 143) jeweils einen äußeren Lagerring (23, 24; 155, 156) umfassen, die eine Lauffläche und zwei äußere Ringteile (121, 122; 142, 143; 148, 149) umfassen, die jeweils mit Anschlägen (125, 126) versehen sind, gegen welche ein entsprechender äußerer Lagerring (23, 24) anliegt, wobei die Anschläge (125, 126) voneinander weg weisen und der Toleranzring (11) die äußeren Ringabschnitte (121, 122; 142, 143; 148, 149) ergreift.

16. Lagereinheit gemäß einem der Ansprüche 10 bis 14, **dadurch gekennzeichnet, dass** die äußeren Ringelemente (5, 6) jeweils einen äußeren Lagerring (23, 24; 105, 106; 155, 156; 202, 203; 172, 173) umfassen, der eine Lauffläche (7, 8) aufweist und der Toleranzring (11) die äußeren Lagerringe (23, 24) ergreift.

17. Lagereinheit gemäß einem der Ansprüche 10 bis 16, **dadurch gekennzeichnet, dass** der Toleranzring (11) mit den äußeren Ringelementen (5, 6; 23, 24...) über eine Klebung verbunden ist.

18. Lagereinheit gemäß einem der Ansprüche 15 bis 17, **dadurch gekennzeichnet, dass** zumindest einer der äußeren Ringteile (121, 122; 142, 143; 148) eine sich nach außen erstreckende Montagewange (127, 137, 146, 149) aufweist.

19. Lagereinheit gemäß der Ansprüche 15 bis 18, **dadurch gekennzeichnet, dass** zumindest einer der äußeren Ringteile (122, 143) eine Bremsscheibe (137) oder eine Bremstrommel (420) aufnimmt.

20. Lagereinheit gemäß Anspruch 19, **dadurch gekennzeichnet, dass** die Bremsscheibe (137) oder Bremstrommel (420) mit einem Zentrierteil (130) verbunden ist, welches auf einem der Ringteile (122) durch einen Presssitz aufgenommen ist.

21. Lagereinheit gemäß Anspruch 20, **dadurch gekennzeichnet, dass** die anderen Ringteile (122) Einrichtungen (127, 128) zur Montage eines Rades aufweisen, wobei die anderen Ringteile (122) und das Zentrierteil (130) miteinander über Schiebekeile (133, 134) verbunden sind.

22. Lagereinheit gemäß der Ansprüche 10 bis 21, **dadurch gekennzeichnet, dass** das innere Element (151, 401) gestufte Bohrungsdurchmesser (152, 153; 402, 403, 404) aufweist.

23. Lagereinheit gemäß einem der Ansprüche 10 bis 22, **dadurch gekennzeichnet, dass** das innere Element zumindest eine Öffnung für den Durchlass eines Gases, einer Flüssigkeit oder elektrischer oder elektronischer Leitungen aufweist.

24. Lagereinheit gemäß einem der Ansprüche 10 bis 23, **dadurch gekennzeichnet, dass** das innere Element zumindest eine Öffnung zum Durchlass einer Reifendruckkontrolleinrichtung aufweist.

25. Lagereinheit gemäß einem der Ansprüche 10 bis 24, **dadurch gekennzeichnet, dass** das innere Element sich radial nach außen erstreckende Wangen zum Abstützen der Rollkörper in einer "O"-Lageranordnung aufweist.

26. Lagereinheit gemäß einem der Ansprüche 10 bis 24, **dadurch gekennzeichnet, dass** zumindest eine Reihe der Rollkörper Kugeln (165, 205) umfasst.

27. Lagereinheit gemäß einem der Ansprüche 8 bis 26, **dadurch gekennzeichnet, dass** zumindest eine Reihe der Rollkörper Zylinderrollen (13, 14; 66) umfasst.

28. Lagereinheit gemäß einem der Ansprüche 10 bis 24, **dadurch gekennzeichnet, dass** zumindest eine Reihe der Rollkörper sphärisch geformte Rollen aufweist.

29. Lagereinheit gemäß einem der Ansprüche 10 bis 28, **dadurch gekennzeichnet, dass** zumindest eine Reihe der Rollkörper Kegelrollen aufweist.

30. Lagereinheit gemäß einem der Ansprüche 10 bis 29, **dadurch gekennzeichnet, dass** die Rollkörper zumindest einer Reihe durch einen metallischen oder nichtmetallischen Käfig (23; 175, 176; 243) getrennt sind, wie zum Beispiel durch einen geschlitzten Plastikkäfig oder einen Käfig, der geschlitzte Taschen für die Rollkörper aufweist.

31. Lagereinheit gemäß einem der Ansprüche 10 bis 30, **dadurch gekennzeichnet, dass** die Rollkörper zumindest einer Reihe gemäß einer vollständigen Komplettauslegung angeordnet sind.

32. Lagereinheit gemäß einem der Ansprüche 10 bis 31, **dadurch gekennzeichnet, dass** das innere Element ein Ringteil (15, 51) oder ein Hohlteil ist.

33. Lagereinheit gemäß einem der Ansprüche 10 bis 31, **dadurch gekennzeichnet, dass** das innere Element ein Massivelement (160) ist.

34. Lagereinheit gemäß Anspruch 33, **dadurch gekennzeichnet, dass** das Massivelement (160) zwei Teile umfasst, die miteinander zum Beispiel über Schweißen verbunden sind.

35. Lagereinheit gemäß einem der Ansprüche 10 bis 34, **dadurch gekennzeichnet, dass** dieses integrierte Sensoren oder zugeordnete Komponenten (zum Beispiel einen Konterring) aufweist zur Vornahme von Steuerungs- und Anzeigefunktionen für Drehgeschwindigkeit oder Geschwindigkeitsdifferenz, Druck-Temperatur-Position etc.

36. Lagereinheit gemäß Lagereinheit gemäß einem der Ansprüche 10 bis 35, **dadurch gekennzeichnet, dass** das innere Lagerelement eine Öffnung aufweist zur Zufuhr von Gas oder Öl (zum Beispiel für die Öleinspritzung für Demontage) zu seiner inneren Oberfläche oder zum Durchleiten elektrischer Leitungen aufweist.

37. Lagereinheit gemäß einem der Ansprüche 10 bis 36, **dadurch gekennzeichnet, dass** verschiedene Komponenten, so Ringe und Ringteile, Käfige, verschiedene Metalle oder Nichtmetalle enthalten.

38. Lagereinheit gemäß einem der Ansprüche 10 bis 37, **dadurch gekennzeichnet, dass** der Toleranzring (11) geschweißt ist.

39. Lagereinheit gemäß einem der Ansprüche 10 bis 38, **dadurch gekennzeichnet, dass** das Lagerspiel positiv (spielbehaftet), Null oder negativ (Lagervorspannung) ist.

40. Fahrzeugradnabeneinheit, **dadurch gekennzeichnet, dass** diese eine Lagereinheit gemäß einem der Ansprüche 10 bis 39 enthält.

41. Zapfenlagereinheit, **dadurch gekennzeichnet, dass** diese eine Lagereinheit gemäß einem der Ansprüche 10 bis 39 enthält.

42. Eisenbahnlagereinheit, **dadurch gekennzeichnet, dass** diese eine Lagereinheit gemäß einem der Ansprüche 10 bis 39 enthält.

43. Getriebelagereinheit, **dadurch gekennzeichnet, dass** diese eine Lagereinheit gemäß einem der Ansprüche 10 bis 39 enthält.

44. Stellantrieblagereinheit, **dadurch gekennzeichnet, dass** diese eine Lagereinheit gemäß einem der Ansprüche 10 bis 39 enthält.

45. Bohrkopflagereinheit, **dadurch gekennzeichnet, dass** diese eine Lagereinheit gemäß der Ansprüche 10 bis 37 enthält.

46. Werkzeug zur Anwendung innerhalb des Verfahrens gemäß der Ansprüche 2 bis 4, **dadurch gekennzeichnet, dass** es zwei bogenförmige Klauen (16) aufweist sowie Bedienungseinrichtungen zum Bewegen der Klauen (16) gegeneinander bei einem Presshub und weg voneinander bei einem Entlastungshub, **dadurch gekennzeichnet, dass** jede Klaue (16) an beiden Enden in Umfangsrichtung Zähne (20) umfasst.

47. Werkzeug gemäß Anspruch 46, **dadurch gekennzeichnet, dass** zumindest zwei Finger (21) vorgesehen sind, wobei die Finger (21) jeweils zwischen zwei Klauen (16) angeordnet sind und am Ende des Presshubes an den Fingern (21) anschlagen.

48. Toleranzring (11) zum Einsatz in einer zweireihigen Kegelrolllagereinheit gemäß der Ansprüche 10 bis 40, **dadurch gekennzeichnet, dass** der Toleranzring eine Anzahl von Ringsegmenten (18) umfasst, welche nach außen vorstehende Formationssegmente (19) umschließen, wobei jedes der Deformationssegmente (19) für plastische Deformation ausgelegt ist.

## Revendications

1. Procédé d'assemblage d'une unité de roulement à élément de roulement à contact oblique à double rangée (1) ayant un élément intérieur (2) avec deux pistes (3, 4), et deux éléments de bague extérieurs séparés (5, 6) avec chacun une unique piste (7, 8), lesdits éléments de bague extérieurs (5, 6) enfermant un espace (12) qui est en forme de coin dans une section à travers l'axe d'unité de roulement, et deux séries d'éléments de roulement (9, 10) qui sont logées chacune entre une piste (3, 4) de l'élément intérieur (2) et une piste (7, 8) d'un élément de bague extérieur (5, 6), des moyens de tolérance (11) étant prévus entre lesdits éléments de bague extérieurs (5, 6) afin de pousser lesdits éléments (5, 6) à l'écart l'un de l'autre de façon à assurer la tolérance requise pour le palier, ledit procédé comportant les étapes consistant à :
- prévoir un élément intérieur (2) ayant deux pistes (3, 4),
- prévoir deux éléments de bague extérieurs (5, 6) ayant chacun une piste (7, 8),
- positionner les éléments de bague extérieurs (5, 6) autour de l'élément intérieur (2),
- positionner les séries d'éléments de roulement (9, 10) entre les pistes respectives (3, 4; 7, 8) de l'élément intérieur (2) et des éléments de bague extérieurs (5, 6),
- prévoir une bague de tolérance sans fin (11),
- déplacer la bague de tolérance (11) jusqu'à une position opposée à l'espace en forme de coin (12) entre les éléments de bague extérieurs (5, 6),
- déformer plastiquement la bague de tolérance (11) de façon à procurer la tolérance requise entre ladite bague de tolérance (11) et les faces opposées (13, 14) des éléments de bague extérieurs (5, 6) qui enferment l'espace en forme de coin (12),
la bague de tolérance (11) comportant plusieurs segments de bague (18), lesdits segments de bague (18) enfermant des segments de déformation qui dépassent vers l'extérieur (19), lesquels segments de déformation (19) sont déformés de manière plastique.

2. Procédé selon la revendication 1, comportant les étapes consistant à :
- prévoir un outil (15) destiné à déformer de manière plastique la bague de tolérance (11), ledit outil (15) comportant au moins deux griffes en forme d'arc (16), dont les surfaces internes (17) définissent au moins une partie de la forme extérieure de la bague de tolérance déformée (11),
- amener les griffes d'outil à engager la bague de tolérance (11) et presser ladite bague de tolérance (11) dans une direction radialement vers l'intérieur.

3. Procédé selon la revendication 2, selon lequel le nombre de segments de bague (18) est égal au nombre de griffes d'outil (16) de l'outil (15), la déformation plastique étant obtenue par l'action combinée d'une paire de griffes voisines (16).

4. Procédé selon la revendication 3, selon lequel chaque griffe d'outil (16) au niveau de ses extrémités opposées a des dents (20) qui s'étendent dans la direction circonférentielle, chaque segment de déformation (19) de la bague de tolérance (11) étant engagé par une paire de dents (20) des griffes d'outil voisines (16).

5. Procédé selon la revendication 2, 3 ou 4, selon lequel l'outil comporte un doigt respectif (21) entre chaque paire de griffes d'outil (16), comportant les étapes consistant à :
- amener les doigts (21) à engager chacun un segment de déformation (19),
- appliquer ensuite les griffes d'outil (16) sur les segments de bague (18).

6. Procédé selon la revendication 2, 3, 4 ou 5, selon lequel l'outil comporte un doigt respectif (21) entre chaque paire de griffes d'outil (16), comportant les étapes consistant à déplacer les griffes (16) vers l'intérieur jusqu'à buter contre les doigts (21).

7. Procédé selon l'une quelconque des revendications précédentes, selon lequel la bague de tolérance (11) comporte au moins un ou bien un nombre impair plus élevé de segments de bague (18) et un nombre égal de segments de déformation (19).

8. Procédé selon l'une des revendications précédentes, comportant l'étape consistant à prévoir une bague de tolérance sans fin (11), dont les dimensions en coupe sont plus grandes que le diamètre extérieur d'au moins un des éléments de bague extérieurs (5, 6).

9. Procédé selon l'une des revendications précédentes, comportant l'étape consistant à déformer de manière plastique la bague de tolérance (11) de façon à réduire ses dimensions en coupe.

10. Unité de roulement à élément de roulement à contact oblique à double rangée fabriquée suivant le procédé selon l'une quelconque des revendications 1 à 9, comportant un élément intérieur (2, 102, 151, 167, 260, 405, 600) ayant deux pistes (3, 4; 168, 169), deux éléments de bague extérieurs (5, 6; 23, 24; 155, 156; 172, 173; 105, 106; 202, 203) portant chacun au moins une piste (7, 8; 170, 171) et enfermant un espace en forme de coin (12), ainsi que deux rangées d'éléments de roulement (9, 10; 109, 110; 113, 114; 123, 124; 158, 159; 165, 166; 241, 242; 251, 252) qui sont chacun en contact de roulement avec une paire de pistes, lesdits éléments de bague extérieurs étant supportés l'un par rapport à l'autre par une bague de tolérance (11) procurant un dégagement de palier axial, **caractérisée en ce que** la bague de tolérance (11) comporte plusieurs segments de bague (18), lesdits segments de bague (18) enfermant des segments de déformation qui dépassent vers l'extérieur (19), lesquels segments de déformation (19) sont déformés de manière plastique.

11. Unité de roulement selon la revendication 10, dans laquelle la bague de tolérance (11) s'étend totalement à l'intérieur du contour défini par les surfaces extérieures des éléments de bague extérieurs (5, 6).

12. Unité de roulement selon l'une quelconque des revendications précédentes, dans laquelle au moins une des séries d'éléments de roulement (9, 10) est une série complémentaire complète.

13. Unité de roulement selon l'une quelconque des revendications 10 à 12, dans laquelle la bague de tolérance (11) comprend des moyens d'étanchéité (51), par exemple un revêtement en caoutchouc.

14. Unité de roulement selon l'une quelconque des revendications 10 à 13, dans laquelle la bague de tolérance comprend un capteur, par exemple une jauge de contrainte destinée à mesurer une pré-charge.

15. Unité de roulement selon l'une quelconque des revendications 10 à 14, dans laquelle les éléments de bague extérieurs (121, 122; 142, 143) comprennent chacun une bague de roulement extérieure (23, 24; 155, 156) pourvue d'une piste ainsi que de deux morceaux de bague extérieure (121, 122; 142, 143; 148, 149) pourvus de butées (125, 126) contre lesquelles repose une bague de roulement extérieure (23, 24) respective, lesdites butées (125, 126) étant orientées à l'écart l'une de l'autre et la bague de tolérance (11) engageant les morceaux de bague extérieure (121, 122; 142, 143; 148, 149).

16. Unité de roulement selon l'une quelconque des revendications 10 à 14, dans laquelle les éléments de bague extérieurs (5, 6) comportent chacun une bague de roulement extérieure (23, 24; 105, 106; 155, 156; 202, 203; 172, 173) pourvue d'une piste (7, 8), et la bague de tolérance (11) engageant lesdites bagues de roulement extérieures (23, 24).

17. Unité de roulement selon l'une quelconque des revendications 10 à 16, dans laquelle la bague de tolérance (11) est reliée aux éléments de bague extérieurs (5, 6; 23, 24 ...) au moyen d'un collage.

18. Unité de roulement selon l'une quelconque des revendications 15 à 17, dans laquelle au moins un des morceaux de bague extérieure (121, 122, 142, 143, 148) a une bride de montage s'étendant vers l'extérieur (127, 137, 146, 149).

19. Unité de roulement selon l'une quelconque des revendications 15 à 18, dans laquelle au moins un des morceaux de bague extérieure (122, 143) porte un disque de frein ou un tambour de frein (420).

20. Unité de roulement selon la revendication 19, dans laquelle le disque de frein (137) ou le tambour de frein (420) est relié à une pièce de centrage (130) qui est montée sur un des morceaux de bague (122) au moyen d'un ajustement serré.

21. Unité de roulement selon la revendication 20, dans laquelle l'autre morceau de bague (121) porte des moyens (127, 128) pour le montage d'une roue dessus, lequel autre morceau de bague (121) et la pièce de centrage (130) s'engagent l'un l'autre au moyen de cannelures (133, 134).

22. Unité de roulement selon l'une quelconque des revendications 10 à 21, dans laquelle l'élément intérieur (151, 401) a des diamètres d'alésage étagés (152, 153; 402, 403, 404).

23. Unité de roulement selon l'une quelconque des revendications 10 à 22, dans laquelle l'élément intérieur comporte au moins un trou pour le passage à travers d'un gaz, ou d'un liquide, ou de fils électriques/électroniques.

24. Unité de roulement selon l'une quelconque des revendications 10 à 23, dans laquelle l'élément intérieur comporte au moins un trou pour le passage de moyens de contrôle de pression de pneumatique.

25. Unité de roulement selon l'une quelconque des revendications 10 à 24, dans laquelle l'élément intérieur a des brides s'étendant radialement vers l'extérieur pour le support des éléments de roulement dans une configuration de roulement du type en «O».

26. Unité de roulement selon l'une quelconque des revendications 10 à 25, dans laquelle au moins une rangée d'éléments de roulement comprend des billes (165, 205).

27. Unité de roulement selon l'une quelconque des revendications 8 à 26, dans laquelle au moins une rangée d'éléments de roulement comprend des rouleaux cylindriques (13, 14, 66).

28. Unité de roulement selon l'une quelconque des revendications 10 à 27, dans laquelle au moins une rangée d'éléments de roulement comprend des rouleaux de forme sphérique.

29. Unité de roulement selon l'une quelconque des revendications 10 à 28, dans laquelle au moins une rangée d'éléments de roulement comprend des rouleaux coniques.

30. Unité de roulement selon l'une quelconque des revendications 10 à 29, dans laquelle les éléments de roulement d'au moins une rangée sont séparés au moyen d'une cage métallique ou non métallique (23; 175, 176, 243), par exemple une cage en matière plastique qui est fendue, ou qui a des poches fendues pour les éléments de roulement.

31. Unité de roulement selon l'une quelconque des revendications 10 à 30, dans laquelle les éléments de roulement d'au moins une rangée sont disposés suivant une disposition totalement complémentaire.

32. Unité de roulement selon l'une quelconque des revendications 10 à 31, dans laquelle l'élément intérieur est une pièce annulaire (15, 51) ou une pièce creuse.

33. Unité de roulement selon l'une quelconque des revendications 10 à 31, dans laquelle l'élément intérieur est un élément plein (160).

34. Unité de roulement selon la revendication 33, dans laquelle l'élément plein (160) comprend deux parties qui sont reliées, par exemple soudées ensemble.

35. Unité de roulement selon l'une quelconque des revendications 10 à 34, comportant des capteurs intégrés ou des composants associés (par exemple une contre-bague) afin de remplir des fonctions de commande/contrôle, par exemple vitesse de rotation ou différence de vitesse, pression, température, position, etc.

36. Unité de roulement selon l'une quelconque des revendications 10 à 35, dans laquelle l'élément de roulement intérieur a une ouverture pour l'alimentation en gaz ou en huile (par exemple injection d'huile pour le démontage) sur sa surface intérieure, ou pour le passage de fils électriques.

37. Unité de roulement selon l'une quelconque des revendications 10 à 36, dans laquelle différents composants, tels que des bagues et des morceaux de bague, des cages, comportent différents métaux/non-métaux.

38. Unité de roulement selon l'une quelconque des revendications 10 à 37, dans laquelle la bague de tolérance (11) est soudée.

39. Unité de roulement selon l'une quelconque des revendications 10 à 38, dans laquelle le dégagement de palier peut être positif (jeu), nul ou négatif (pré-charge).

40. Unité de moyeu de roue de véhicule, comportant une unité de roulement selon l'une quelconque des revendications 10 à 39.

41. Unité de roulement de pignon, comportant une unité de roulement selon l'une quelconque des revendications 10 à 39.

42. Unité de palier ferroviaire, comportant une unité de roulement selon l'une quelconque des revendications 10 à 39.

43. Unité de roulement de transmission, comportant une unité de roulement selon l'une quelconque des revendications 10 à 39.

44. Unité de roulement de dispositif d'actionnement, comportant une unité de roulement selon l'une quelconque des revendications 10 à 39.

45. Unité de roulement de tête de forage, comportant une unité de roulement selon l'une quelconque des revendications 10 à 37.

46. Outil pour utilisation dans le procédé selon l'une quelconque des revendications 2 à 4, comportant au moins deux griffes en forme d'arc (16), des moyens d'actionnement étant prévus pour déplacer les griffes (16) l'une vers l'autre dans une course de pression, et à l'écart l'une de l'autre dans une course de relâchement, **caractérisé en ce que** chaque griffe (16) aux deux extrémités dans une direction circonférentielle est pourvue de dents (20).

47. Outil selon la revendication 46, dans lequel deux doigts (21) sont prévus, lesdits doigts (21) étant positionnés chacun entre deux griffes d'outil (16) à l'extrémité de la course de pression mettant les doigts (21) en butée.

48. Bague de tolérance (11) pour utilisation dans une unité de roulement à élément de roulement à contact oblique à double rangée selon l'une quelconque des revendications 10 à 40, **caractérisée en ce que** la bague de tolérance comporte plusieurs segments de bague (18) enfermant des segments de déformation qui dépassent vers l'extérieur (19), chaque segment de déformation (19) étant prévu pour une déformation plastique.
